Europäisches Patentamt

European Patent Office

Office européen des brevets

(19)

(11) EP 0 782 010 B1

(12) FASCICULE DE BREVET EUROPEEN

(45) Date de publication et mention
de la délivrance du brevet:
**13.09.2000 Bulletin 2000/37**

(51) Int Cl.⁷: **G01V 1/20**

(21) Numéro de dépôt: **95402892.4**

(22) Date de dépôt: **21.12.1995**

(54) **Antenne linéaire électroacoustique d'émission et antenne d'émission/réception comprenant une telle antenne**

Lineare akustische Sendeantenne und dazugehörige Sende-Empfangsantenne

Linear acoustic antenna and transmit-receive antenna therefor

(84) Etats contractants désignés:
**DE GB**

(43) Date de publication de la demande:
**02.07.1997 Bulletin 1997/27**

(73) Titulaire: **ETAT FRANCAIS**
**Représenté par le Délégué Général pour l'Armement**
**75007 Paris 7ème (FR)**

(72) Inventeurs:
• **Boucher, Didier**
**F-83140 Six Fours les Plages (FR)**
• **Ostrowski, Philippe**
**F-83140 Six Fours les Plages (FR)**

(56) Documents cités:
**EP-A- 0 561 229**      **EP-A- 0 600 758**
**WO-A-91/15784**        **FR-A- 2 302 656**
**FR-A- 2 525 373**       **US-A- 4 160 229**
**US-A- 4 876 675**

**Description**

La présente invention concerne une antenne linéaire électroacoustique d'émission pour milieu aquatique, ainsi qu'une antenne d'émission/réception dans laquelle est incorporée une telle antenne.

Les domaines techniques de l'invention sont, d'une part, celui des transducteurs électroacoustiques pour émission d'ondes très basses fréquences à forte puissance dans un milieu aquatique à diverses profondeurs, et d'autre part, celui des transducteurs électroacoustiques, pour la réception d'ondes acoustiques en milieu aquatique associés en antennes linéaires de réception.

Il est connu la technologie des transducteurs électroacoustiques de réception associés en antenne linéaire de réception dans une gaine souple à l'intérieur de laquelle ils sont introduits et maintenus à intervalle fixe au moyen de câbles, ladite antenne linéaire de réception étant étanche et présentant une flottabilité nulle, voir par exemple FR-A-2 525 373.

Il est également, par exemple dans le document US-A-4 876 675, connu la technologie des transducteurs électroacoustiques immergeables formés d'un pilier de céramiques piézo-électriques compris entre deux pavillons identiques qui rayonnent des ondes acoustiques dans le fluide environnant. L'excitation électrique des céramiques piézo-électriques communique au pilier un mouvement de dilatation-conpression, moteur d'entraînement des pavillons.

Le pilier est entouré généralement par un fourreau en matériau alvéolaire à la manière d'un baffle assurant le découplage des faces arrière des deux pavillons par rapport au fluide environnant.

Les transducteurs constituent des sources monopolaires non directives qui pour des raisons diverses, en particulier de puissance et de directivité, sont généralement associées en antennes d'émission.

Les antennes d'émission actuellement connues sont constituées d'un nombre variable de transducteurs disposés à l'horizontal en milieu aquatique selon la technique dite du "poisson remorqué". Ces antennes présentent, dans le domaine des très basses fréquences, des inconvénients liés aux interactions acoustiques entre les transducteurs particulièrement lorsque la compacité est recherchée. Ces inconvénients se traduisent par une réduction du niveau d'émission effectif par rapport à la valeur espérée, une dégradation des diagrammes de directivité, voire des dommages sur certains transducteurs dus aux brutales variations de charge acoustique.

Pour pallier ces inconvénients, l'invention propose de recourir à une architecture d'antenne linéaire permettant de passer d'un système d'émission volumique à un système linéaire très directif dans un plan horizontal.

L'invention concerne une antenne linéaire électroacoustique d'émission qui comprend au moins un tronçon de gaine souple fermée aux extrémités contenant des transducteurs électroacoustiques maintenus à une distance fixe l'un de l'autre par des câbles d'assemblage, caractérisée en ce que :

- les transducteurs électroacoustiques sont du type émissif et sont alimentés par des signaux électriques de fréquence acoustique,
- un dispositif d'alimentation, disposé d'un côté dudit tronçon, fournit lesdits signaux électriques de fréquence acoustique,
- au moins un dispositif de raccordement est disposé à une extrémité dudit tronçon pour permettre son raccordement mécanique et électrique à au moins ledit dispositif d'alimentation,
- chaque dispositif de raccordement est connecté par des conducteurs électriques aux transducteurs électroacoustiques disposés du côté opposé à celui dudit dispositif d'alimentation, et
- chaque tronçon de gaine souple est rempli d'un fluide dont la densité a été choisie pour obtenir la flottabilité nulle dudit tronçon.

L'invention concerne également une antenne d'émission-réception électroacoustique pour milieu aquatique, caractérisée en ce qu'elle comprend :

- une antenne linéaire électroacoustique d'émission telle que définie ci-dessus,
- un module acoustique de réception, disposé dans le prolongement de l'antenne d'émission et comprenant des transducteurs électroacoustiques de type réceptif, pour détecter les signaux acoustiques en provenance de milieu aquatique et pour fournir des signaux électriques correspondants, et
- des moyens de connexion électrique pour transmettre lesdits signaux électriques fournis par les transducteurs électroacoustiques du module acoustique de réception à un système de traitement électronique.

Le module acoustique de réception est raccordé au moins mécaniquement à l'antenne linéaire électroacoustique d'émission par un dispositif de raccordement mécanique.

Les moyens de connexion électrique comprennent des conducteurs électriques qui sont disposés dans chaque tronçon de l'antenne linéaire électroacoustique d'émission et sont connectés entre eux par l'intermédiaire des dispositifs de raccordement du tronçon.

D'autres caractéristiques et avantages de la présente invention apparaîtront à la lecture de la description suivante d'un exemple particulier de réalisation, ladite description étant faite en relation avec les dessins joints dans lesquels :

- la figure 1 est un schéma de l'architecture d'une partie d'une antenne linéaire électroacoustique d'émission selon l'invention, vue en coupe longitudinale,
- la figure 2 est une vue en coupe longitudinale d'un exemple particulier de réalisation d'une antenne linéaire électroacoustique d'émission présentant des dispositifs de raccordement,
- la figure 3 est une vue en coupe longitudinale d'un transducteur électroacoustique d'émission pour une antenne linéaire selon l'invention,
- la figure 4 est une vue en coupe transversale selon la ligne IV-IV de la figure 3,
- la figure 5 est une vue en coupe longitudinale d'un dispositif de raccordement reliant l'antenne linéaire d'émission à un module d'alimentation ou à un module acoustique de réception, et
- la figure 6 est un schéma des éléments constitutifs d'un ensemble linéaire d'émission-réception.

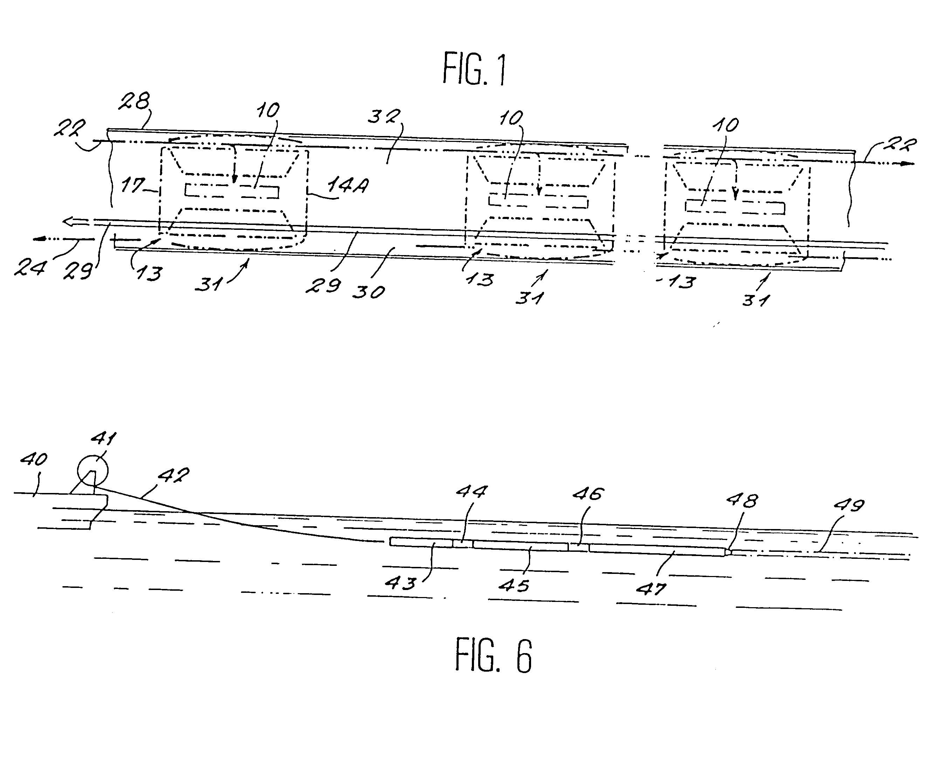

Une antenne linéaire électroacoustique d'émission selon l'invention comprend un tronçon de gaine souple tubulaire 28 (figures 1, 2 et 3) dont les extrémités sont fermées par des embouts 74, 75 et qui contient plusieurs transducteurs électroacoustiques 31 ainsi qu'un fluide 32. Les transducteurs électroacoustiques 31 sont maintenus à une distance fixe l'un de l'autre par des câbles d'assemblage 29 dont ils sont solidaires et sont connectés électriquement entre eux par des câbles électriques 24, 79.

Chaque embout 74, 75 constitue un dispositif de raccordement du tronçon 28 à un autre tronçon (non représenté) qui peut être un tronçon identique ou similaire ou un dispositif d'alimentation 43 ou encore un module acoustique de réception 47 (figure 6). Un exemple particulier de réalisation de deux embouts, mâle et femelle, sera décrit ci-après en relation avec la figure 5.

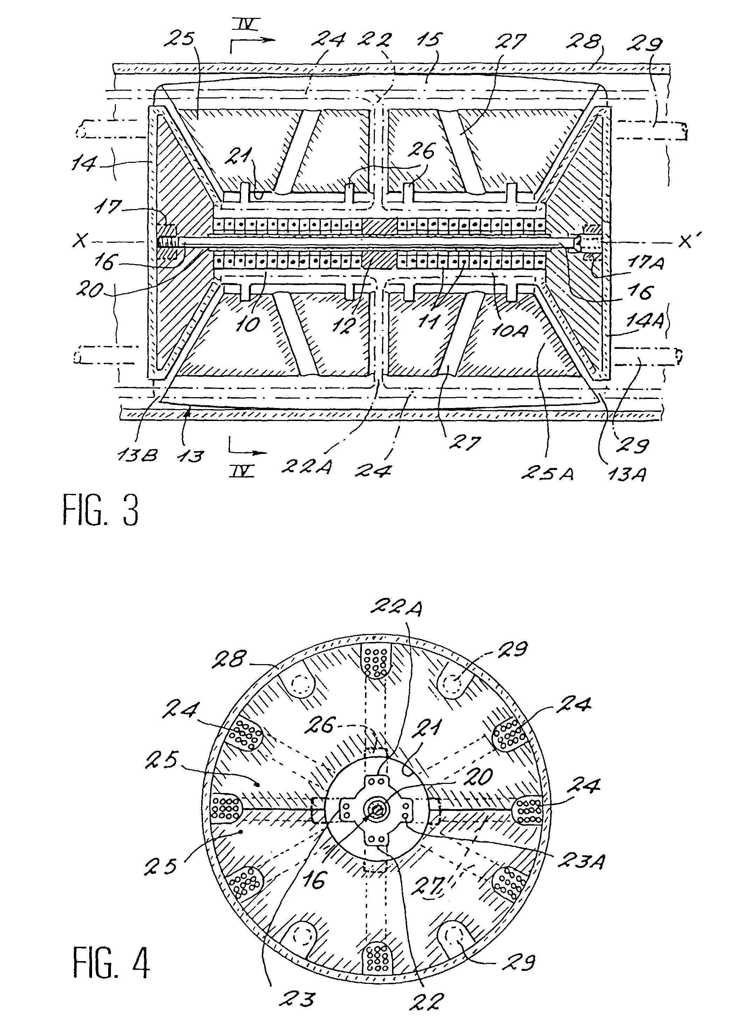

Chaque transducteur électroacoustique, source élémentaire d'émission, comprend (figures 3 et 4) deux moteurs électroacoustiques 10 et 10A comprenant chacun un nombre égal - dans un mode de réalisation préférentiel quatorze - de céramiques piézo-électriques 11. Ces moteurs sont placés de part et d'autre d'une contre-masse centrale 12, et coaxialement à l'intérieur d'un boîtier 13, recouvrant l'ensemble des moteurs 10 et 10A, jusqu'à des pavillons 14 et 14A, situés à l'extrémité de ceux-ci. Un volume 15 est ainsi délimité par les pavillons 14 et 14A, et le boîtier 13.

Les céramiques piézo-électriques peuvent être remplacées par des barreaux de matériaux magnétostrictifs.

Les moteurs électroacoustiques 10 et 10A, et la contremasse intermédiaire 12, sont tenus ensemble par une tige de précontrainte 16. Cette tige est filetée à ses extrémités pour immobiliser les deux pavillons 14 et 14A, sur les extrémités du pilier ainsi constitué au moyen des filetages 17, 17A usinés dans les pavillons.

Ces filetages permettant également de régler la tension de précontrainte de la tige 16 vissée en butée dans le pavillon 14 et tendue par le serrage du pavillon 14A sur la tige 16.

Un fourreau intérieur 20 isole la tige de précontrainte des moteurs 10 et 10A, et une chape d'étanchéité extérieure 21, assure l'isolation des moteurs par rapport au volume 15,

Les divers moyens de fixation sont tels qu'ils permettent une liberté de déplacement, d'une part des extrémités des moteurs électroacoustiques du côté du pavillon, et d'autre part, des pavillons 14 et 14A, eux-mêmes, par rapport au boîtier 13, de façon à assurer la pleine émission d'ondes acoustiques dans le milieu ambiant.

L'alimentation des moteurs électroacoustiques 10 et 10A est fournie par des câbles d'alimentation 24 raccordés aux céramiques piézo-électriques 11 par des rampes d'alimentation 22, 22A et 23, 23A décalées de 90° par rapport à l'axe longitudinal des moteurs. L'ensemble des connexions est étanche.

Le volume 15 est en partie occupé par des baffles 25 et 25A maintenus par des rétentions 26. Ces baffles sont constitués d'un matériau alvéolaire de densité comprise entre 200 et 400 kg par $m^3$ afin d'absorber, d'une part, le rayonnement arrière des pavillons 14 et 14A et d'autre part les vibrations des moteurs électroacoustiques eux-mêmes qui pourraient rayonner à l'intérieur du volume 15. Dans le matériau alvéolaire sont ménagés des passages tubulaires 27 qui seront utilisés lors du remplissage du volume 15, par un fluide décrit ultérieurement.

La réalisation d'un tel transducteur et l'ensemble des pièces de liaison ainsi que les baffles sont du domaine connu et réalisables par tout homme de métier. C'est dans le choix des divers paramètres, en particulier poids et dimensions des constituants, volume du transducteur et par conséquent densité de l'ensemble en regard de la très basse fréquence d'émission que se situe partiellement l'invention. Ces aspects seront décrits ci-après dans la description consacrée à la flottabilité.

La gaine tubulaire souple 28 (figures 3, 4 et 5) a par exemple, une épaisseur de cinq millimètres environ et est réalisée en polyuréthanne ou dans un matériau résultant d'un mélange de polyuréthanne pour 80 à 95 parts et de polychlorure de vinyle (P.V.C.) pour 20 à 5 parts. La gaine a une impédance acoustique voisine de celle du milieu àqueux ambiant. Elle présente une bonne résistance mécanique à la traction et est suffisamment souple pour pouvoir être enroulée sur le tambour d'un treuil ayant un diamètre d'au moins 1,30m sans déformation du volume interne de la gaine.

Le diamètre intérieur est tel qu'il peut accueillir le transducteur électroacoustique dont le boîtier 13 a une forme légèrement conique arrondie aux extrémités 13A, 13B pour lui permettre de glisser à l'intérieur et de le centrer.

Le procédé de mise en place dans une gaine 28 d'une série de transducteurs électroacoustiques d'émission 31 est le suivant. En premier lieu, les transducteurs sont fixés sur des câbles 29 par des moyens connus tels que des olives serties sur les câbles ou moulages de profilés dans la structure des baffles dans lesquels passent les câbles bloqués par un collier circulaire qui les traverse. Deux transducteurs successifs sont séparés par une distance 30 qui est égale à la demi-longueur d'onde d'émission. La gaine 28 est introduite dans un tube dit "tube à vide" dont le diamètre intérieur est légèrement supérieur à celui de la gaine. Après avoir réalisé l'étanchéité aux deux extrémités entre le tube à vide et la gaine, on réalise le vide pour plaquer la gaine contre les parois internes du tube à vide parfaitement cylindrique et la dilater légèrement pour faciliter l'introduction de la série de transducteurs dont l'assemblage a été préalablement réalisé comme décrit ci-dessus. L'introduction est réalisée au moyen de dispositifs de traction, genre treuils, tirant sur les câbles 29 et entraînant le train de transducteurs à l'intérieur de la gaine maintenue fixe dans le tube à vide.

Il est ainsi réalisé une antenne linéaire émissive qui, pour fonctionner, doit être obligatoirement connectée par un dispositif de raccordement à un module d'alimentation en signaux électriques de fréquence acoustique et présenter une flottabilité nulle. En outre l'antenne linéaire émissive doit pouvoir, le cas échéant, être connectée par un dispositif de raccordement à une antenne réceptrice. Enfin, une antenne linéaire émissive selon l'invention peut être constituée de plusieurs tronçons, chaque tronçon comprenant une pluralité de transducteurs électroacoustiques qui sont connectés par des dispositifs de raccordement.

Ces dispositifs de raccordement doivent être capables d'assurer des fonctions mécaniques, donc de supporter l'effort de traction de l'antenne linéaire par un bateau, mais également de réaliser des jonctions électriques d'alimentation en énergie électrique et de transmission de signaux entre différents éléments et entre les différents éléments et le bateau.

Ils doivent présenter en outre un profil hydrodynamique et une flottabilité tels qu'ils ne perturbent pas la navigation de l'antenne, ni son enroulement sur le tambour d'un treuil de stockage et de manoeuvre à partir d'un bateau.

Enfin, ils doivent assurer l'étanchéité interne et externe de la gaine à ses deux extrémités et permettre le remplissage de l'antenne linéaire par un fluide, le cas échéant en légère surpression.

Les matériaux constitutifs doivent être compatibles électrolytiquement avec l'environnement d'utilisation, notamment eau de mer et fluide de remplissage.

Dans l'exemple de la figure 6, ces dispositifs de raccordement sont au nombre de deux, d'une part celui 44, entre l'antenne linéaire d'émission selon l'invention 45 et son module d'alimentation 43 en signaux électriques de fréquence acoustique, d'autre part, celui 46 entre l'antenne linéaire d'émission 45 et une antenne réceptrice 47. Ces dispositifs de raccordement peuvent être de tout type connu et, notamment comme ceux décrits dans les brevets français N° 2 529 397 et N° 2 584 874.

La figure 5 est une vue en coupe longitudinale d'un tel dispositif de raccordement qui comprend une partie femelle 50, fixée sur le module d'alimentation 43, ou sur l'antenne réceptrice 47, et une partie mâle 51, fixée sur l'antenne linéaire 45. Les parties femelle et mâle sont équipées chacune d'un même embout cranté 52, dont le diamètre extérieur est compatible avec le diamètre intérieur de la gaine 28, limité par une butée 53, qui détermine la longueur de l'introduction de l'embout dans la gaine. L'embout est également équipé de dispositifs internes 54 de fixation des câbles tracteurs 29 destinés d'une part à reprendre les efforts de traction exercés sur la gaine lors du remorquage et d'autre part de maintenir en position le train de transducteurs à l'intérieur de la gaine en conservant un intervalle fixe entre les transducteurs mais en leur autorisant une légère rotation sur eux-mêmes. En effet, lors de l'enroulement de l'antenne sur le tambour d'un treuil de manoeuvre, le train de transducteurs retenu à chaque extrémité par les dispositifs 54 va pouvoir équilibrer la tension plus ou moins importante exercée successivement sur chacun des quatre câbles tracteurs 29, du fait de la courbure de la gaine 28, par un phénomène d'auto-entraînement en légère rotation interne des transducteurs les uns par rapport aux autres dans la gaine. Le phénomène est réversible et permet ainsi l'équilibrage de la tension des câbles tracteurs lors du déroulement de l'antenne linéaire dans sa manoeuvre de mise à l'eau tout en conservant l'intervalle entre les transducteurs, accordé à la fréquence d'émission.

Les parties mâle et femelle 51 et 50 sont fixées sur la gaine 28 au moyen d'une bague 56 sertie venant comprimer la gaine 28 sur les crans 57.

Les broches de jonctions, en nombre variable, fiches mâles et femelles 59,60 permettent l'alimentation électrique et la transmission des signaux de l'antenne d'émission selon l'invention ainsi que l'acheminement à l'intérieur de ladite antenne d'énergie électrique et de signaux vers ou provenant d'autres modules d'émission ou de réception avec lesquels ladite antenne est raccordée. Ces broches de jonctions sont montées sur des supports isolants 61 et 62 contenues dans les corps 63 et 64 des parties femelles et mâles.

Le support 61 est fixe tandis que le support 62 est mobile dans l'axe longitudinal de l'antenne. Le support mobile 62 de la partie mâle 51 comporte une valve 65, destinée à équilibrer les pressions des fluides de remplissage contenus dans les éléments interconnectés.

Cette fonction valve est actionnée au moyen du support mobile 62 dont la translation ne peut s'effectuer que lorsque toutes les broches des jonctions 59 et 60 sont en prise et que les joints interfaciaux 66, 67 sont en contact, grâce à un ressort de rappel 68 taré en conséquence.

Le support fixe femelle 61, comporte un passage 69 équipé d'une valve permettant la circulation du fluide dans le sens mâle-femelle.

Un système de clavetage, non décrit, assure la liaison mécanique entre les parties mâle et femelle par des moyens connus, filetages et crans munis de détrompeurs.

Les deux dispositifs de raccordement entre l'antenne linéaire selon l'invention, son module d'alimentation en signaux électriques de fréquence acoustique à une extrémité, une antenne réceptrice à l'autre extrémité, se distinguent par le nombre de broches de connexions électriques et signaux. Les embouts ainsi que les autres systèmes sont communs aux différents dispositifs de raccordement.

Il convient de remarquer préalablement qu'eu égard aux seules performances acoustiques, il était suffisant d'envisager d'utiliser directement l'eau de mer pour combler le volume 15, la présence supplémentaire d'un film d'eau entre la masse des baffles 25 et 25A et les pavillons 14, 14A, permettant une émission en très basses fréquences. Mais dans cette hypothèse, l'antenne aurait présenté une flottabilité négative qui aurait nuit à sa stabilité horizontale donc à la directivité de l'émission, avantage déterminant recherché dans l'architecture d'antenne linéaire.

La puissance émise par un transducteur est liée, d'une part, à la quantité de céramiques piézo-électriques et, d'autre part, au carré du coefficient de couplage électromécanique entre le pavillon et le moteur électroacoustique qui le met en vibration. Ce coefficient de couplage électromécanique dépend lui-même de la forme du pilier, de celle du pavillon, de son élasticité, de la masse centrale et de son assemblage, sachant qu'un facteur primordial est l'élasticité du pavillon.

En effet, si le pavillon est trop élastique, il y aura perte d'énergie importante par déformation et, s'il est trop rigide, il est lourd car les matériaux rigides sont généralement pesants, ce qui réduit la bande passante.

Par ailleurs, on sait que la fréquence parasite due à la déformation est une fonction $\sqrt{Y}/\sqrt{R}$,, où R est la masse volumique du matériau et Y son module d'élasticité ou de Young, et de la forme du pavillon sachant que pour minimiser la perte d'énergie due à cette déformation, il faut que cette fréquence parasite soit en dehors de la plage de fréquences de travail du transducteur.

Or, le rapport Y/R étant constant pour tous les matériaux métalliques, le choix d'une masse volumique faible ne change pas la fréquence de résonance et cela d'autant plus que le moyeu central est renforcé par une pièce rigide qui peut être adaptée à la forme voulue du pavillon et permet d'améliorer la rigidité de l'ensemble. Ainsi, à volume et encombrement égaux d'un pavillon en matériau lourd, on peut alléger celui-ci, garder la même fréquence de résonance et donc les mêmes fréquences de travail en basse fréquence tout en augmentant la puissance transmissible par le pavillon.

Lorsque l'on veut obtenir des transducteurs de forte puissance en basse fréquence, les conditions nécessaires pour obtenir une basse fréquence de résonance sont en apparence contradictoires avec les conditions exigées pour obtenir une forte puissance d'émission.

En effet, la fréquence de résonance F d'un empilement est de la forme :

$$F = \frac{1}{2\,\pi\,\sqrt{e\,.\,m}}$$

dans laquelle e représente l'élasticité et m la masse équivalente des pavillons et de l'empilement piézo-électrique. La masse m détermine les contraintes de poids et de dimensions à ne pas dépasser, le facteur sur lequel on peut agir est donc l'élasticité e de l'empilement. Or, l'élasticité est donnée par :

$$e = L/(Y \cdot S)$$

formule dans laquelle Y est le module de Young, L est la longueur et S est la surface de contact entre les plaquettes de céramiques piézo-électriques qui est égale à la section transversale des plaquettes.

La longueur L étant également limitée par des contraintes d'encombrement à ne pas dépasser, le facteur sur lequel on peut agir pour réduire la fréquence de résonance en augmentant l'élasticité est donc la section S qui doit être réduite.

La puissance acoustique Pac émise par un empilement de plaquettes en céramique piézo-électrique s'exprime par la formule suivante :

$$Pac = V.w.E^2k^2.\varepsilon.Qm,$$

formule dans laquelle V est le volume d'empilement, w la pulsation correspondant à la fréquence, E le champ électrique appliqué à l'empilement qui est limité par la tension maximale admise, k le coefficient de couplage électromécanique de la céramique qui dépend de la nature du matériau, $\varepsilon$ la constante diélectrique de la céramique et Qm un facteur de qualité qui dépend de la largeur de la bande passante et qui est donc imposé par le choix de cette largeur.

Cette formule montre que le volume V de l'empilement est un des facteurs sur lequel on peut agir pour augmenter la puissance émise.

Dans le cas d'un barreau cylindrique droit, le volume V est égal au produit de la longueur par la section transversale.

Comme on l'a déjà expliqué, la longueur maximale L est limitée pour des raisons d'encombrement.

Si l'on augmente la section transversale S, on augmente la puissance émise, mais comme on l'a déjà expliqué précédemment, on réduit l'élasticité de l'empilement et on augmente donc la fréquence de résonance. On voit donc que le choix de la section droite S d'un empilement ayant la forme d'un barreau cylindrique ne permet pas d'obtenir à la fois une forte puissance et une basse fréquence d'émission.

Pour réduire cette surface S, il a été proposé que les surfaces du contact de chaque plaquette avec celles qui lui sont juxtaposées dans l'empilement soient réduites à deux méplats dont la surface est inférieure à la section transversale maximum de chaque plaquette.

Les caractéristiques du transducteur émissif contenu dans l'antenne linéaire selon l'invention résultent d'une optimisation des contraintes physiques, acoustiques et électriques qui viennent d'être exposées. Compte tenu du choix d'une gamme très basse fréquence, inférieure à deux kilohertz, la masse de l'empilement (céramiques 11, fourreau 20, tige de précontrainte 16) et celle des pavillons 14, 14A, atteindrait 7,3 kg.

Le matériau alvéolaire constituant les baffles 25 et 25A est une mousse de polychlorure de vinyle qui présente les caractéristiques suivantes :

| Densité | 300 kg par m$^3$ |
|---|---|
| Résistance à l'écrasement | 7,4 MPa |
| Limite d'élasticité à la traction | 8,7 MPa |
| Coefficient de cisaillement | 130 MPa |
| Coefficient de dilatation | 30 * 10$^{-6}$/°C |
| Conductivité thermique | 0,053 W/m*°C à 10° |
| Dimension des cellules | 0,2 millimètre |

La masse des baffles 25 et 25A est de 2,2 kg, soit un poids total du transducteur dans l'air de 9,5kg. Le tableau ci-dessous donne le détail des matières employées et la masse des composants.

| Désignation | Matière | Nombre | Masse unitaire (en Kg) | Masse totale (en Kg) |
|---|---|---|---|---|
| pavillon | acier | 2 | 2,4 | 4,8 |
| fourreau | téflon | 1 | 0,01 | 0,01 |
| céramique | P1.89 | 28 | 0,0232 | 0,65 |
| tige de précontrainte | 40CDV12 | 1 | 0,06 | 0,06 |
| contremasse | acier | 1 | 1,8 | 1,8 |
| baffles | mousse de P.V.C. | 2 | 1,1 | 2,2 |
| Total | | | | 9,52 |

Comme la distance 30 séparant dans la gaine les transducteurs successifs est égale à une demi-longueur d'onde d'émission, la distance inter-pavillon est donc sensiblement égale à 300mm.

A cette masse des transducteurs, il faut ajouter la masse des dispositifs de raccordement, la masse de la gaine, la masse des câbles de montage et de maintien des transducteurs dans la gaine, la masse des conducteurs d'alimentation. Compte-tenu de l'addition de toutes ces masses, il s'agit de mettre l'antenne en flottabilité nulle en introduisant dans la gaine un fluide de densité comprise entre 0,8 et 0,9.

Le fluide est introduit par les valves 65 des parties mâles des connecteurs à l'aide d'un appareillage spécifique de remplissage et de dégazage (non représenté) exerçant une force sur la face du support mobile 62 qui provoque son déplacement en translation suivant l'axe longitudinal de l'antenne, libérant les orifices des valves 65 et permettant de remplir d'une part les cavités du volume 15, non occupées par les baffles 25, 25A grâce aux passages tubulaires 27 de chacun des transducteurs, d'autre part de combler les volumes 30 entre les transducteurs et entre les transducteurs d'extrémité et les connecteurs.

En plus de sa densité comprise entre 0,8 et 0,9 le fluide de remplissage présente les caractéristiques suivantes :

- il est très peu compressible;
- son inertie chimique est totale à l'égard des matériaux environnants tels que la gaine (polyuréthanne, polychlorure de vinyle), les isolants des fils de câblage, les boîtiers et pièces mécaniques diverses, les transducteurs et matériau des baffles...;
- il présente une transparence acoustique telle que son impédance acoustique est égale à celle de l'eau;
- il n'est pas solidifiable aux températures basses (maxima -20°) et non transformable de façon irréversible aux températures élevées (jusqu'à 60°);
- sur le plan diélectrique, sa teneur en impuretés est limitée et sa rigidité diélectrique est inférieure à 5 kilovolts par millimètre;
- sa mise en oeuvre aux températures normales d'utilisation implique un coefficient de viscosité inférieur à 500 cst;
- pour des impératifs de sécurité, ininflammabilité en cas de fuite, son point éclair est élevé;
- il n'est pas toxique et présente une chaleur massique élevée (chaleur spécifique et conductibilité thermique élevées) afin de pouvoir conduire et évacuer les calories produites par le fonctionnement des moteurs piézo-électriques des transducteurs.

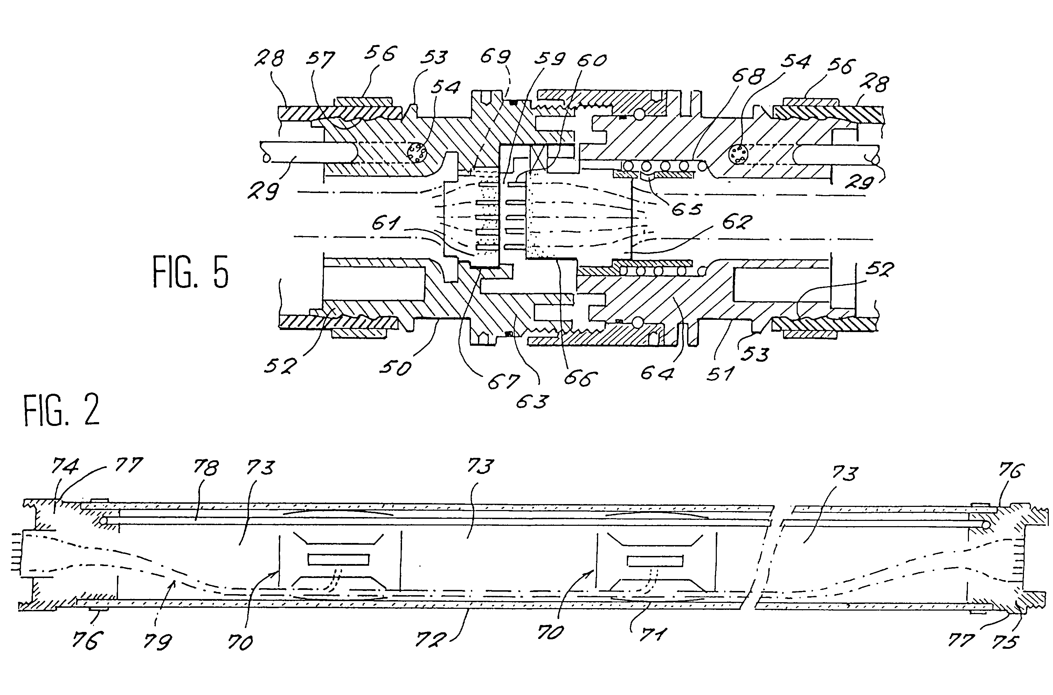

L'étude de la flottabilité de l'antenne linéaire d'émission, selon l'invention, sera réalisée dans le cadre des spécifications suivantes (figure 2) :

- cinq transducteurs dont la masse totale dans l'air est de 9,5kg et le volume de 8,41 litres,
- une gaine 72 réalisée dans un matériau comprenant des polychlorures de vinyle (P.V.C.), et du polyuréthanne (P.U.) dont la densité est de 1,24. La gaine présente donc une masse de 3,99kg pour 1 mètre de gaine et un volume intérieur de 31,41 litres pour 1 mètre de gaine,
- chaque transducteur est séparé du suivant par un intervalle 73,
- les deux dispositifs de raccordement 74 et 75 ont une masse de 9,5kg et un volume de 9,41 litres, ils sont sertis dans la gaine sur une longueur 76 de 15 cm, la partie hors gaine 77 mesure 10 cm, la distance entre les transducteurs d'extrémité et les demi-connecteurs 73 est de 300mm.
- les câbles tracteurs 78 sont au nombre de quatre, leur masse est de 57 grammes pour un mètre,
- les conducteurs électriques et coaxiaux 79, ont une masse de 500 grammes pour un mètre,
- le fluide de remplissage a une densité de 0,8,
- la valeur prise pour la densité de l'eau de mer est de 1,027.

| BILAN des MASSES et des VOLUMES | | |
|---|---|---|
| transducteurs | 5 x 9,5 | = 47,5 kg |
| connecteurs | 2 x 9,5 | = 19,0 kg |
| gaine | 3,44m x 3,99 | = 13,72 kg |
| conducteurs électriques | 3,44m x 0,500 | = 1,72 kg |
| câbles tracteurs | 3,44m x 4 x 0,057 | = 0,78 kg |
| fluide de remplissage soit 6 intervalles de 300mm 1,80m x 31,41 l | = 56,53 litres | |
| plus 5% du volume des transducteurs 5 x 8,4l x 5% | = 2,10 litres | |
| TOTAL | 58,63 litres | |
| DENSITE | = 0,8 | = 46,91 kg |
| | MASSE TOTALE | $\overline{129,63 \text{ kg}}$ |
| volume de la gaine 3,44 x 34,63 litres au mètre | | = 119,127 l |
| volume des demi-connecteurs dépassant de la gaine 0,10 x 2 x 34,630 litres | | = 6,926 l |
| | VOLUME TOTAL | $\overline{126,053}$ |
| | POUSSEE D'ARCHIMEDE X 1,027 | = 129,45 |

**EP 0 782 010 B1**

La poussée d'Archimède compense la masse de l'antenne. L'équilibrage précis de l'antenne, pour une densité différente de fluide de remplissage ou une variation de la masse des connecteurs, est opéré en ajustant la densité du fluide de remplissage, soit sur le volume du fluide dans certaines limites. Il est également possible de substituer au fluide interne, dans lesdits intervalles, un matériau alvéolaire de densité inférieure à celle du fluide.

La mise en oeuvre de l'antenne linéaire, selon l'invention, est opérée à partir d'un bateau 40 (figure 6), équipé d'un treuil 41, fonctionnant grâce à des moyens moteurs non représentés, dont le diamètre d'enroulement du tambour vide est au moins égal à 1,30m correspondant à la courbure maximum de l'antenne sans risque de détérioration.

Un câble électroporteur 42, de longueur variable, généralement inférieure à 1.000m tracte dans l'ordre :

- un module électronique d'accord 43, contenant notamment un dispositif d'alimentation en signaux de fréquence acoustique de l'antenne linéaire émissive, selon l'invention,
- un dispositif de raccordement ou connecteur 44 entre le module 43 et l'antenne émissive 45,
- l'antenne linéaire émissive proprement dite 45 dont la longueur peut être comprise entre 20 et 30 mètres,

A ces éléments constitutifs d'un ensemble d'émission peuvent être ajoutés des modules de réception comprenant :

- un dispositif de raccordement ou connecteur 46, entre l'antenne d'émission 45 et un module acoustique de réception à lever d'ambiguïté 47, non décrit,
- un connecteur 48, entre le module 47 et un autre module acoustique de plus grande longueur que le module 47, non décrit.

L'antenne linéaire d'émission ainsi que les modules de réception présentent une flottabilité nulle.

La profondeur d'utilisation de ces éléments dépend du poids du câble électroporteur que l'on immerge pour tracter l'ensemble, du poids du module électronique d'accord ainsi que de la vitesse du bateau tracteur.

L'antenne linéaire, selon l'invention, est plus particulièrement destinée à entrer dans un système de lutte anti-sous-marine plus léger que les systèmes connus, nécessitant une mise en oeuvre simplifiée, avec des performances acoustiques et une directivité améliorées.

**Revendications**

1. Antenne linéaire électroacoustique d'émission pour milieu aquatique qui comprend au moins un tronçon (28) de gaine souple fermée aux extrémités qui contient des transducteurs électroacoustiques (31) maintenus à une distance fixe l'un de l'autre par des câbles d'assemblage, caractérisée en ce que :

   - lesdits transducteurs électroacoustiques (31) sont du type émissif et sont alimentés par des signaux électriques, de fréquence acoustique,
   - un dispositif d'alimentation (43), disposé d'un côté dudit tronçon 28, fournit lesdits signaux électriques de fréquence acoustique,
   - au moins un dispositif de raccordement est disposé à une extrémité dudit tronçon pour permettre son raccordement mécanique et électrique à au moins ledit dispositif d'alimentation,
   - chaque dispositif de raccordement est connecté par des conducteurs électriques aux transducteurs électroacoustiques disposés du côté opposé à celui dudit dispositif d'alimentation, et
   - au moins ledit tronçon de gaine souple est rempli d'un fluide (32) dont la densité a été choisie pour obtenir la flottabilité nulle dudit tronçon.

2. Antenne linéaire électroacoustique d'émission selon la revendication 1, caractérisée en ce qu'elle comprend plusieurs tronçons de gaine souple contenant chacun une pluralité de transducteurs électroacoustiques, lesdits tronçons étant assemblés en série dans le prolongement l'un de l'autre par l'intermédiaire desdits dispositifs de raccordement.

3. Antenne linéaire électroacoustique d'émission, selon les revendications 1 ou 2, caractérisée en ce que chaque transducteur électroacoustique comprend :

   - deux moteurs électroacoustiques (10) (10A), constitués chacun d'un même nombre de céramiques piézo-électriques (11) jointives ou de barreaux de matériaux magnétostrictifs, placés de part et d'autre d'une contre-masse centrale (12),

- deux pavillons (14) (14A) situés chacun à une extrémité desdits moteurs,
- un dispositif d'assemblage précontraint desdits moteurs de part et d'autre de ladite contre-masse avec lesdits pavillons, au moyen d'une tige filetée (16) à ses extrémités immobilisant les deux pavillons et permettant de faire varier la précontrainte,
- un fourreau intérieur (20) pour isoler la tige filetée précontrainte (16) des moteurs (10) et (10A),
- une chape extérieure (21) pour isoler les moteurs (10) et (10A) par rapport au milieu ambiant,
- un dispositif étanche d'alimentation électrique desdits moteurs électroacoustiques au moyen de câbles d'alimentation électrique (24) raccordés aux céramiques piézo-électriques (11) par des rampes d'alimentation (22), (22A), (23), (23A), décalées de 90° par rapport à l'axe longitudinal des moteurs,
- deux baffles (25), (25A) constitués d'un matériau alvéolaire dans lequel seront ménagés des passages tubulaires (27), situés en arrière des pavillons (14), (14A) et maintenus en position autour des moteurs électroacoustiques (10), (10A) par des rétentions fixes (26), pour absorber le rayonnement acoustique arrière desdits pavillons ainsi que les vibrations desdits moteurs, et
- un boîtier (13) enveloppant les baffles (25), (25A), laissant libre le déplacement longitudinal des pavillons (14), (14A), de forme conique arrondie à ses extrémités (13A), (13B) pour permettre le centrage du transducteur à l'intérieur d'une gaine tubulaire distincte dudit transducteur.

4. Antenne linéaire électroacoustique d'émission selon les revendications 1 ou 2, caractérisée en ce que chaque dispositif de raccordement est constitué d'une partie femelle (50) et d'une partie mâle (51) de forme cylindrique comportant des moyens de raccordement mécanique et électrique qui comprennent respectivement :

- un embout cranté extérieurement (52) sur une distance limitée par une butée (53) qui détermine la longueur de recouvrement de l'embout par la gaine sertie au moyen d'une bague (56) sur les crans (57),
- ledit embout est équipé intérieurement de dispositifs (54) de fixation des câbles tracteurs (29) pour reprendre les efforts de traction exercés sur la gaine,
- des broches de jonction en nombre variable (59), (60) pour l'alimentation électrique et la transmission des signaux, montées sur des supports isolants (61), (62) contenus dans les corps (63), (64) des parties femelle et mâle,
- un dispositif de remplissage de la gaine par un fluide en surpression et d'équilibrage des pressions, dudit fluide entre les éléments interconnectés, au moyen d'une valve (65) incluse dans le support mobile (62) dont la translation ne peut s'effectuer que lorsque toutes les broches de jonction (59), (60) sont en prise et que les joints interfaciaux (66), (67) sont en contact grâce à un ressort de rappel (68), taré en conséquence, le support fixe (61) comportant lui-même un passage (69) avec valve autorisant la circulation du fluide dans le sens mâle-femelle, et
- un système de clavetage, pour assurer la liaison mécanique entre les parties mâle et femelle, par des moyens connus tels que filetages et crans munis de détrompeurs.

5. Antenne d'émission-réception électroacoustique pour milieu aquatique, caractérisée en ce qu'elle comprend :

- une antenne linéaire électroacoustique d'émission (45) selon l'une quelconque des revendications précédentes,
- un module acoustique de réception (47), disposé dans le prolongement de la dite antenne d'émission et comprenant des transducteurs électroacoustiques de type réceptif, pour détecter les signaux acoustiques en provenance du milieu aquatique et pour fournir des signaux électriques correspondants, et
- des moyens de connexion électrique pour transmettre lesdits signaux électriques fournis par les transducteurs électroacoustiques dudit module acoustique de réception à un système de traitement électronique.

6. Antenne d'émission-réception électroacoustique selon la revendication 5, caractérisée en ce que ledit module acoustique de réception (47) est raccordé au moins mécaniquement à ladite antenne linéaire électroacoustique d'émission (45) par un dispositif de raccordement mécanique.

7. Antenne d'émission-réception électroacoustique selon la revendication 6, caractérisée en ce que les moyens de connexion électrique comprennent des conducteurs électriques qui sont disposés dans chaque tronçon de ladite antenne linéaire électroacoustique d'émission et sont connectés entre eux par l'intermédiaire desdits dispositifs de raccordement de tronçon.

**Claims**

1. An emit electroacoustic linear antenna for an aquatic environment, said antenna comprising at least one segment (28) of flexible jacket that is closed at its ends and that contains electroacoustic transducers (31) held at a fixed distance apart by assembly cables, said antenna being characterized in that:

   - said electroacoustic transducers (31) are of the emissive type and are fed with electrical signals of acoustic frequency;
   - a signal feed device (43) disposed at one end of said segment (28) delivers said electrical signals of acoustic frequency;
   - at least one connection device is disposed at one end of said segment to enable it to be connected mechanically and electrically to at least said signal feed device;
   - each connection device is connected via electrical conductors to the electroacoustic transducers disposed at that end which is opposite from said signal feed device; and
   - said at least one flexible jacket segment is filled with a fluid (32) whose relative density is chosen to obtain neutral buoyancy for said segment.

2. An emit electroacoustic linear antenna according to claim 1, characterized in that it comprises a plurality of segments of flexible jacket, each segment containing a plurality of electroacoustic transducers, said segments being assembled together in series in alignment with one another by means of said connection devices.

3. An emit eLectroacoustic linear antenna according to claim 1 or 2, characterized in that each electroacoustic transducer comprises:

   - two electroacoustic motors (10) (10A), each of which is made up of the same number of mutually-touching piezoelectric ceramic elements (11) or of bars of magnetostrictive materials, placed on either side of a central counter-mass (12);
   - two horns (14) (14A), each of which is situated at a respective end of said motors;
   - a prestressed assembly device for assembling together said horns with said motors on either side of said counter-mass in pressed manner, by means of a rod (16) that is threaded at its ends, that holds the two horns stationary, and that makes it possible to vary the prestress;
   - an inner sheath (20) for isolating the prestress threaded rod (16) from the motors (10) and (10A);
   - an outer casing (21) for isolating the motors (10) and (10A) relative to the surrounding environment;
   - a watertight electrical power supply device for electrically powering said electroacoustic motors by means of electrical power supply cables (24) connected to the piezoelectric ceramic elements (11) via power supply lines (22), (22A), (23), (23A) that are offset by 90° about the longitudinal axis of the motors;
   - two baffles (25), (25A) which are made of a cellular material, which are provided with tubular passageways (27), which are situated behind the horns (14), (14A), which are held in position around the electroacoustic motors (10), (10A) by fixed retaining means (26), and which serve to absorb the back acoustic radiation of said horns as well as the vibration of said motors; and
   - a housing (13) encasing the baffles (25), (25A), while leaving the horns (14), (14A) free to move longitudinally, which housing is of rounded conical shape at its ends (13A); (13B) so as to enable the transducer to be centered inside a tubular jacket distinct from said transducer.

4. An emit electroacoustic linear antenna according to claim 1 or 2, characterized in that each connection device is made up of a female portion (50) and of a male portion (51) of cylindrical shape provided with mechanical and electrical connection means, each of which portions comprises:

   - an end-piece (52) that is externally serrated over a distance limited by an abutment (53) which determines the overlap length over which the end-piece is overlapped by the jacket as crimped by means of a ring (56) onto the serrations (57);
   - said end-piece is equipped internally with devices (54) for fixing to the towing cables (29), which devices take up the traction forces exerted on the jacket;
   - a variable number of junction pins (59), (60), for electrical power supply and signal transmission purposes, which pins are mounted on insulating supports (61), (62) contained in the bodies (63), (64) of the female and male portions;
   - a filling device for filling the jacket with a pressure-boosted fluid and for balancing the pressures of said fluid between the interconnected elements, by means of a valve (65) included in the moving support (62) which can be moved in translation only when all of the junction pins (59), (60) are engaged and when the interface gaskets (66), 67) are in contact by means of a return spring (68) calibrated accordingly, the fixed support (61) itself being provided with a passageway (69) provided with a valve allowing the fluid to flow in the male-to-female direction; and

- a keying system for mechanically coupling together the male and female portions by known means such as threads and serrations provided with position-identifying means.

5. An emit-receive electroacoustic antenna for an aquatic environment, said antenna being characterized in that it comprises:

- an emit electroacoustic linear antenna (45) according to any preceding claim;
- a receive acoustic module (47) disposed in alignment with said emit-antenna and comprising receptive-type electroacoustic transducers, and serving to detect acoustic signals coming from the aquatic environment and to deliver corresponding electrical signals; and
- electrical connection means for conveying said electrical signals delivered by the electroacoustic transducers of said receive acoustic module to an electronic processing system.

6. An emit-receive electroacoustic antenna according to claim 5, characterized in that said receive acoustic module (47) is connected at least mechanically to said emit electroacoustic linear antenna (45) by a mechanical connection device.

7. An emit-receive electroacoustic antenna according to claim 6, characterized in that the electrical connection means comprise electrical connectors which are disposed in each segment of said emit electroacoustic linear antenna and which are connected together by means of said segment connection devices.

**Patentansprüche**

1. Lineare elektroakustische Sendeantenne, welche mindestens einen an den Enden geschlossenen biegsamen Abschnitt aufweist, in welchem von Assemblierkabeln in einem bestimmten Abstand voneinander gehaltene elektroakustische Wandler (31) angeordnet sind, dadurch gekennzeichnet, dass:

- die elektroakustischen Wandler (31) Strahlungswandler sind und von elektrischen Schallfrequenzsignalen versorgt werden,
- eine an einer Seite des besagten Abschnitts 28 angeordnete Versorgungsvorrichtung (43) die besagten elektrischen Schallfrequenzsignale liefert,
- mindestens eine Anschlussvorrichtung an einem Ende des besagten Abschnitts angeordnet ist, um den mechanischen und elektrischen Anschluss an mindestens die besagte Versorgungsvorrichtung zu ermöglichen,
- jede Anschlussvorrichtung anhand von elektrischen Leitern an die an der der Versorgungsvorrichtung gegenüber liegenden Seite angeordneten elektroakustischen Wandler angeschlossen ist, und
- mindestens der besagte biegsame Schlauchabschnitt mit einer Flüssigkeit (32) gefüllt ist, deren relative Dichte so berechnet wurde, dass für den besagten Abschnitt ein nullwertiger Auftrieb erzielt wird.

2. Lineare elektroakustische Sendeantenne gemäß Patentanspruch 1, dadurch gekennzeichnet, dass sie mehrere biegsame Schlauchleitungsabschnitte umfasst, welche jeweils mehrere elektroakustische Wandler enthalten, wobei die besagten Abschnitte serienmäßig in der Verlängerung jedes Abschnitts anhand der besagten Anschlussvorrichtungen zusammengefügt sind.

3. Lineare elektroakustische Sendeantenne gemäß Patentansprüche 1 oder 2, dadurch gekennzeichnet, dass jeder elektroakustische Wandler folgende Bestandteile umfasst:

- zwei elektroakustische Motoren (10) (10A), ein jeder bestehend aus einer gleichen Anzahl von aneinanderstoßenden piezoelektrischen Keramiken (11) oder Stäben aus magnetostriktiven Materialien, welche beidseitig einer zentralen Gegenmasse (12) angeordnet sind,
- zwei Trichter (14) (14A), welche jeweils an einem Ende des besagten Motors angebracht sind,
- eine vorgespannte Assembliervorrichtung der besagten Motoren an jeder Seite der besagten Gegenmasse zu den besagten Trichtern, anhand eines an seinen Enden mit einem Gewinde versehenen Stabs (16), welcher die beiden Trichter immobilisiert und es ermöglicht, die Vorspannung zu variieren,

- eine Innenhülse (20) zum Isolieren des vorgespannten Gewindestabs (16) von den Motoren (10) und (10A),
- eine Außenabdeckung (21), um die Motoren (10) und (10A) vom Umgebungsmilieu zu isolieren,
- eine dichte Vorrichtung zur Stromversorgung der besagten elektroakustischen Motoren anhand von Stromversorgungskabeln (24), welche über in Bezug auf die Längsachse der Motoren um 90° versetzte Versorgungsrampen (22), (22A), (23), (23A) mit den piezoelektrischen Keramiken verbunden sind,
- zwei Schallwände (25), (25A), bestehend aus einem Schaummaterial, in welches röhrenförmige Passagen (27) eingelassen sind; diese Schallwände sind hinter den Trichtern (14), (14A) angebracht und von festen Rückhalteelementen (26) um die elektroakustischen Motoren (10), (10A) in Position gehalten, um die akustische Rückstrahlung der besagten Trichter sowie die Schwingungen der besagten Motoren aufzufangen, und
- ein Gehäuse (13), welches die Schallwände (25), (25A) umschließt, wobei es die Längsverschiebung der Trichter (14), (14A) ermöglicht, dessen Enden (13A), (13B) in abgerundeter kegelartiger Form ausgeführt sind, um das Zentrieren des Wandlers im Inneren einer vom besagten Wandler unterschiedlichen röhrenförmigen Schlauchleitung zu ermöglichen.

4. Lineare elektroakustische Sendeantenne gemäß Patentanspruch 1 oder 2, dadurch gekennzeichnet, dass jede Anschlussvorrichtung aus einem Mutterteil (50) und einem Vaterteil (51) in zylinderartiger Form besteht und mit jeweils den folgenden mechanischen und elektrischen Anschlussmitteln ausgestattet ist:

- ein außen eingekerbtes Endstück (52) über eine von einem Anschlag (53) begrenzte Länge, welche die Abdeckungslänge des Endstücks durch die anhand eines Rings (56) über den Kerben (57) eingequetschte Schlauchleitung bestimmt,
- das besagte Endstück ist innen mit Befestigungsvorrichtungen (54) für die Zugseile (29) versehen, um die auf die Schlauchleitung ausgeübten Zugbeanspruchen aufzunehmen,
- Verbindungsstifte in variabler Anzahl (59), (60) für die Stromversorgung und die Signalübertragung, welche auf in den Körpern (63), (64) der Mutter- und Vaterteile angeordneten Isolierhalterungen (61), (62) montiert sind,
- eine Vorrichtung zum Füllen der Schlauchleitung mit einer sich in Überdruck befindlichen Flüssigkeit und zum Ausgleichen der Drücke der besagten Flüssigkeit zwischen den miteinander verbundenen Elementen, anhand eines in der beweglichen Halterung (62) angebrachten Ventils (65), deren Translation nur erfolgen kann, wenn alle Verbindungsstife (59), (60) in Eingriff sind und die Schnittstellendichtungen (66), (67) dank einer entsprechend tarierten Rückholfeder (68) in Kontakt stehen, wobei die feste Halterung (61) ihrerseits eine mit einem Ventil versehene Passage (69) aufweist, um den Umlauf der Flüssigkeit in der Richtung Vaterteil - Mutterteil zu ermöglichen, und
- ein Keilverbindungssystem zum Gewährleisten der mechanischen Verbindung zwischen den Vater- und Mutterteilen anhand von bekannte Mitteln wie beispielsweise mit Vertauschsicherungen versehene Gewinde und Kerben.

5. Elektroakustische Sende-/Empfangsantenne für aquatische Umgebung, dadurch gekennzeichnet, dass sie folgende Bestandteile enthält:

- eine lineare elektroakustische Sendeantenne (45) gemäß irgendeiner der vorstehenden Patentansprüche,
- ein akustisches Empfangsmodul (47), welches in der Verlängerung der besagten Sendeantenne angeordnet und mit elektroakustischen Empfangswandlern ausgestattet ist, um die von der aquatischen Umgebung kommenden akustischen Signale aufzufangen und entsprechende elektrische Signale zu erzeugen, und
- elektrische Anschlussmittel zum Übermitteln der besagten, von den elektroakustischen Wandlern des besagten akustischen Empfangsmoduls erzeugten elektrischen Signale an ein elektronisches Verarbeitungssystem.

6. Elektroakustische Sende-/Empfangsantenne gemäß Patentanspruch 5, dadurch gekennzeichnet, dass das besagte akustische Empfangsmodul (47) mindestens mechanisch über eine mechanische Anschlussvorrichtung mit der besagten linearen elektroakustischen Sendeantenne (45) verbunden ist.

7. Elektroakustische Sende-/Empfangsantenne gemäß Patentanspruch 6, dadurch gekennzeichnet, dass die elektrischen Anschlussmittel elektrische Leiter umfassen, welche in jedem Abschnitt der besagten linearen elektroakustischen Antenne angeordnet und über die besagten Anschlussvorrichtungen der Abschnitte miteinander verbunden sind.

FIG. 1

FIG. 6

FIG. 5

FIG. 2

FIG. 3

FIG. 4

15